# EUROPEAN PATENT SPECIFICATION

(11) **EP 2 413 484 B1**
(45) Date of publication and mention of the grant of the patent: **18.04.2018**
(21) Application number: 11168248.0
(22) Date of filing: 31.05.2011
(51) Int. Cl.: G06F 11/07, G06F 11/16, H02M 3/157, G05B 9/03

(54) **Safety control system**
Sicherheitssteuerungssystem
Système de contrôle de sécurité

(30) Priority: 07.06.2010 JP 2010130533
(43) Date of publication of application: 01.02.2012
(73) Proprietor: Fuji Electric Co., Ltd., Kawasaki-shi 210-9530 (JP)
(72) Inventor: Kokubun, Hiroyuki, Kawasaki-shi, 210-9530 (JP); Sato, Ikuya, Kawasaki-shi, 210-9530 (JP)
(74) Representative: MERH-IP Matias Erny Reichl Hoffmann Patentanwälte PartG mbB

(56) References cited:
- EP-A1- 1 517 200
- WO-A1-2004/059494
- US-A1- 2005 223 274
- US-A1- 2006 100 718
- US-A1- 2006 242 461

## Description

### BACKGROUND OF THE INVENTION

### Field of the Invention

The present invention relates to a safety control system that has a safety monitor function of a controlled apparatus, such as a power converter, so as to control the controlled apparatus based on a control signal received through a network, and more particularly, relates to a safety control system that executes synchronous processing between a processor having both a control function and a safety monitor function and a processor having only a safety monitor function with high precision to achieve high safety.

### Description of the Related Art

Conventionally, a controlled apparatus, such as a power converter, has required functional safety, and a functional safety standard typified by IEC61508, for example, has been developed. The functional safety standard defines a function that shifts an apparatus to a safe state based on signals from an external sensor or the like, in addition to diagnosis and monitor functions. Such a function of shifting to a safe state includes safe stop and safe deceleration. In addition, as a method of transmitting control signals and safety signals from an external controller to a power converter, a method of using wiring to connect signal lines to a power converter for each function has become mainstream. This method, however, has disadvantages in design and cost because wirings become complicated depending on a system scale in spite of easy mounting. Accordingly, there is proposed a system using a "safety bus" in which safety signals transmitted by wiring are mixed with control signals and carried by an industrial network, as disclosed in JP-A-2006-178730, for example.

In addition, JP-A-2006-325390 discloses an apparatus for routing an external safety controller, and input equipment and output equipment designed with a safety standard to a network. The input and output of this apparatus are each configured from separate equipment, and connected by a redundant terminal (transmitting and receiving unit) to achieve a safety function.

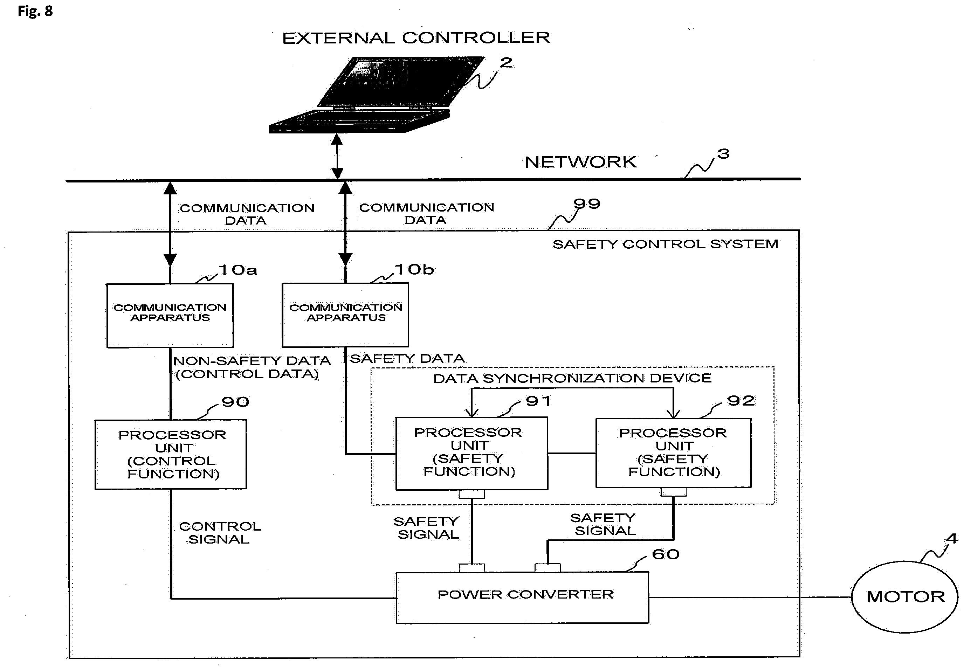

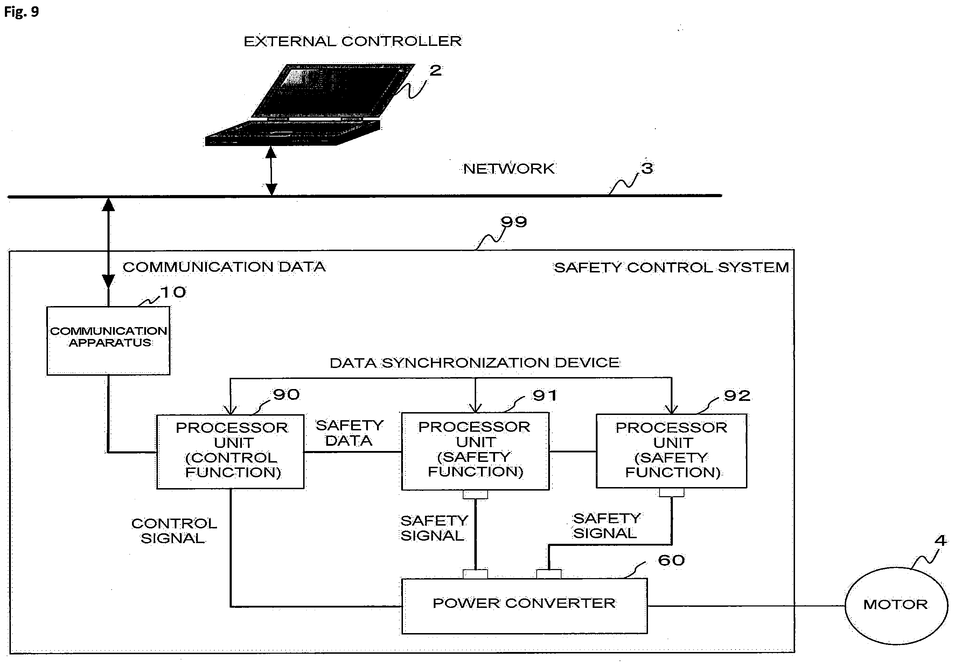

In achieving a safety bus in a power converter, a communication apparatus uses the following method to satisfy a functional safety standard. As shown in FIG. 8, for example, two independent communication apparatuses 10a, 10b are provided to separate control data and safety data from among communication data running through a safety bus (network 3). Alternately, as shown in FIG. 9, a dedicated processor unit is provided to receive communication data mixedly including safety data and non-safety data (control data) through one communication apparatus 10 and to separate the safety data and the non-safety data from the communication data.

By integrating three processor units shown in FIG. 9 into two processor units on the request for hardware cost reduction, and mounting a control function and a safety function in one processor unit and only a safety function in the other processor unit, the number of units can be reduced to achieve size and cost reductions while satisfying conditions of a dual-mode of safety functions.

However, this unit configuration causes a problem due to the mixture of a safety function and a non-safety function. For example, safety functions in a dual-mode have to synchronize with each other so as to concurrently execute the same safety processing. However, there is a problem that safety processing of one processor unit is affected by a behavior of non-safety processing, which tends to cause out-of-synchronization.

WO 2004/059494 A1 discloses a motor controller containing a control unit that is allocated to the motor and a fail-safe device for influencing the control unit. The motor controller also comprises a processing unit containing a memory, in which a program that is assigned to the control unit is stored in order to operate the control unit and the fail-safe device. To enable the operating program of the control unit to be modified without influencing the operating program of the fail-safe device and vice versa, the processing unit and its memory are divided into a first control part comprising a first memory part, in which a first program is stored for operating the control unit and a second control part comprising a second memory part, in which a second program is stored for operating the fail-safe device.

EP 1 517 200 A1 discloses a safety controller that may execute both standard and safety programs using shared architecture in which two processors symmetrically execute the safety program and check each other for errors, and one processor only executes the standard program to minimize undetected symmetrical corruption of the safety programs.

US 2006/100718 A1 discloses multiple microcontrollers used in controlling operation of an appliance. User input deactivating the appliance is received and processed by a first and second microcontrollers, which separately and independently act to remove power from the appliance upon receipt of user input. Failure of one microcontroller in processing user input does not result in the appliance entering into an unsafe mode. Further, a third processor in a power supply module is used to control power into, and out of, the power supply module, so that under certain conditions, power may be remove from the system entirely or to certain components.

### SUMMARY OF THE INVENTION

The invention is made in view of the foregoing considerations, and it is an object of the invention to provide a safety control system that allows the number of processor units to be reduced to achieve cost and space reduction, while completely maintaining synchronization between safety functions in a dual-mode configuration. According to the present invention, there is proposed a safety control system according to claim 1 accomplishing this object. Dependent claims are related to preferred embodiments.

A safety control system according to the present invention includes a communication apparatus for transmitting and receiving communication data to/from an external controller through a network; a first processor unit for performing a control function that receives communication data transmitted from the external controller through the communication apparatus and outputs a control signal to a power converter based on the communication data, and a safety function that outputs a stop command to the power converter in response to the communication data, and a second processor unit for performing only a safety function, wherein the first processor unit includes a control command generation device for, if the communication data includes non-safety data, generating a control signal based on the non-safety data and outputting the control signal to the power converter; a safety data transfer device for, if the communication data includes safety data, generating a first external interruption signal, which is an interruption signal for the second processor unit, and a first internal interruption signal, which is an interruption signal in the processor, and transferring the safety data to the second processor unit; a first safety data execution device for executing safety processing based on the safety data triggered by the first internal interruption signal; and a connection device for receiving a result of safety processing executed by the second processor unit, and generating communication data to be transmitted to the external controller based on the received result and an execution result of the first safety data execution device, and the second processor unit includes a second safety data execution device that starts up with the first external interruption signal, wherein the device executes safety processing based on the safety data transferred from the first processor unit, and transmit the result of the safety processing to the first processor unit.

Herein, the processor unit refers to an independent constitutional unit that executes arithmetic processing for achieving a specific function, irrespective of the form thereof, such as a substrate or apparatus.

According to the invention, the first processor unit performs both of a control function and a safety function, and the second processor unit performs only a safety function to obtain the safety processing timing between both the processor units through an external interruption signal from the first processor unit with a heavy processing load. The second processor unit has a lighter processing load than that of the first processor unit; therefore, safety processing is in no slowdown even in the timing of the first processor unit, thus achieving complete synchronization of the safety functions of both the processor units.

According to an embodiment of the invention, there is provided a safety control system, wherein the first processor unit includes a first timer device for generating a second internal interruption signal at a fixed time interval, a first memory diagnostic device for executing memory diagnostic processing by the second internal interruption signal, generating an error detection code based on a memory region on a first safety- related memory region, generating a second external interruption signal and transmitting the error detection code to the second processor unit, after generation of the error detection code, and a first safety management device that starts up with a third external interruption signal generated by a second memory diagnostic device of the second processor unit, wherein the first safety management device compares an error detection code transmitted from the second memory diagnostic device and an error detection code generated by the first memory diagnostic device, and if both codes do not coincide with each other, the first safety management device executes error processing, and the second processor unit includes a second timer device for generating a third internal interruption signal after lapse of a preset time before restarting, the second memory diagnostic device for executing memory diagnostic processing in response to the third internal interruption signal, generating an error detection code based on a second safely-related memory region, generating a fourth external interruption signal and transmitting the error detection code to the first processor unit, after generation of the error detection code, and a second safety management device that starts up with the second external interruption signal generated
by the first memory diagnostic device of the first processor unit, wherein the second safety management device adjusts the preset time of the second timer device based on a time difference between external interruption signal output timings of the first memory diagnostic device and the second memory diagnostic device and compares an error detection code transmitted from the first memory diagnostic device and an error detection code generated by the second memory diagnostic device, and if both codes do not coincide with each other, the second safety management device executes error processing.

A memory diagnosis function that is one safety function is required to generate and transfer an error detection code in the same timing. Meanwhile, in the timer device that generates error detection code generation timing, by adjusting the preset time of the second timer in transmission timing of the error detection signal from the first processor unit, the second timer device is synchronized with the first timer device, thereby to prevent timing deviation of memory diagnosis processing of both the processor units from being accumulated.

According to an embodiment of the invention, there is provided a safety control system, wherein the first memory diagnostic device transmits a first error detection code along with a first transmission number to be incremented in order for each transmission, the second memory diagnostic device transmits a second transmission number along with a second error detection code with a value obtained by incrementing the latest first transmission number transmitted from a first memory device as the transmission number, and the first safety management device and the second safety management device compare respective error detection codes including respective transmission numbers, and when at least either one of the transmission numbers and the error detection codes has no coincidence, execute error processing.

According to the invention, in case that a deviation occurs in the memory diagnosis processing timing between both the processor units, a deviation, that is, an out-of-synchronization state is detected and error processing is executed.

According to the invention, the number of processor units can be reduced to achieve cost and space reduction, while completely maintaining synchronization between safety functions in a dual-mode configuration. Moreover, in case that out-of-synchronization occurs between safety functions due to break-down or the like, out-of-synchronization is detected and error processing is executed, thus allowing a safety control system to be constructed with high reliability.

### BRIEF DESCRIPTION OF THE DRAWINGS

FIG. 1 is a configuration diagram of a safety control system 1 and peripherals according to an embodiment of the invention;
FIG. 2 is a functional block diagram of processor units 11, 12 in FIG. 1;
FIG. 3 is an explanatory diagram of an operation outline of the safety control system 1 according to the embodiment of the invention;
FIG. 4 is a flowchart showing a processing procedure of a separation device 22;
FIG. 5 is an explanatory diagram of region partitions of memories 34, 64 in FIG. 2;
FIG. 6 is a flowchart showing a processing procedure of a memory diagnostic device 28 and a safety management device 29 in FIG. 2;
FIG. 7 is a flowchart showing a processing procedure of a memory diagnostic device 58 and a safety management device 59 in FIG. 2;
FIG. 8 is an example of a configuration of a conventional safety control system; and
FIG. 9 is another example of a configuration of a conventional safety control system.

### DESCRIPTION OF THE PREFERRED EMBODIMENT

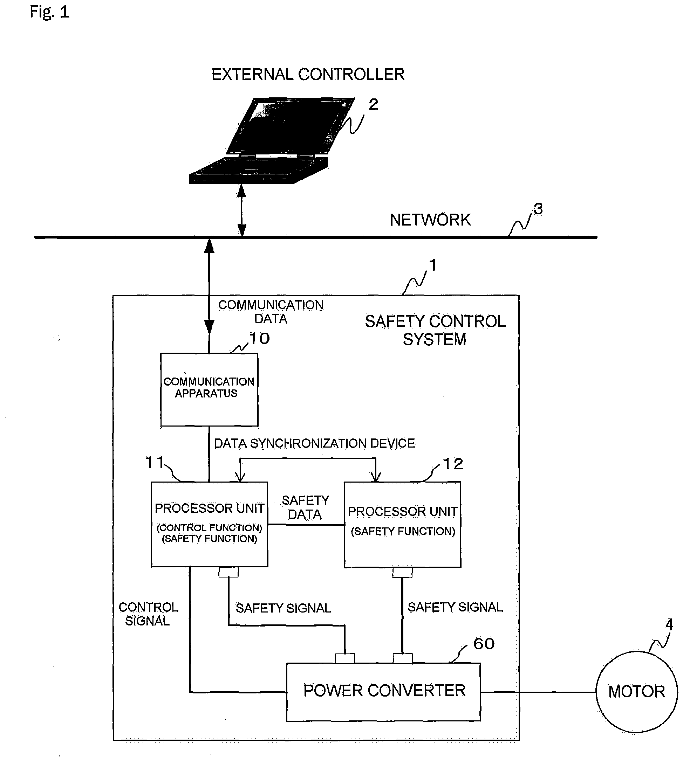

An embodiment of the invention will be described below with reference to the drawings. FIG. 1 is a configuration diagram of a safety control system 1 and peripherals according to the embodiment of the invention. The embodiment of the invention has the following main difference from a conventional safety control system 1 shown in FIG. 9: the safety control system according to the embodiment includes a processor unit 11 having both of a control function and a safety function by integrating the functions of a processor unit 90 and a processor unit 91, and a processor unit 12 having only a safety function. The respective processor units 11, 12, a communication apparatus 10 and a power converter 60 are connected through cables. In addition, the processor unit 11 and the processor unit 12 are connected through an external interruption signal line as a data synchronization device.

In this configuration, a non-safety signal is output from the processor unit 11 to the power converter 60, and a safety signal is output from both of the processor unit 11 and the processor unit 12 to the power converter 60. For example, when a safety signal for emergency stop is output from at least either one of the processor unit 11 and the processor unit 12, the power converter 60 performs emergency stop. Accordingly, a single-mode configuration for a control system and a dual-mode configuration for a safety system are achieved by the processor unit 11 and the processor unit 12.

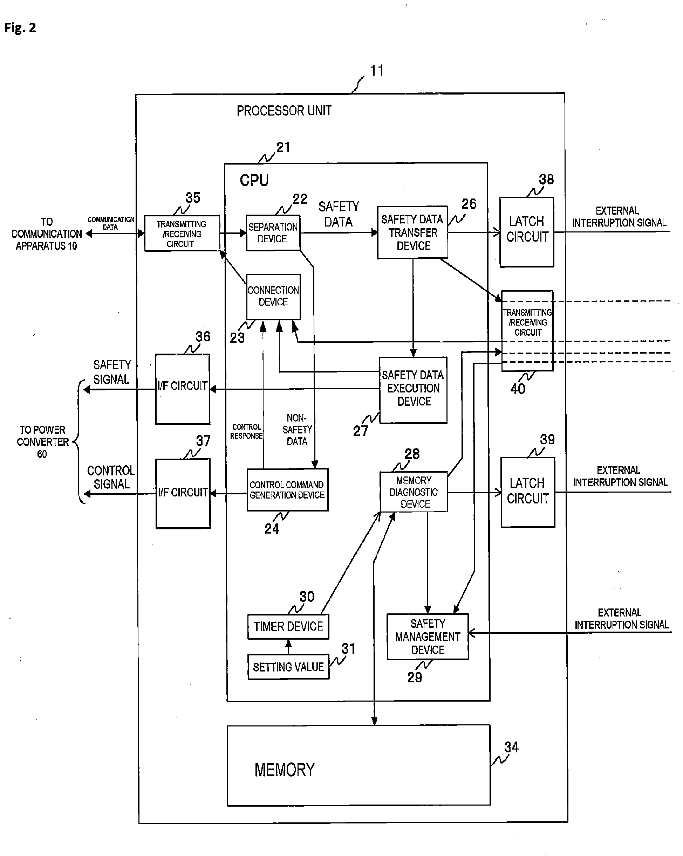

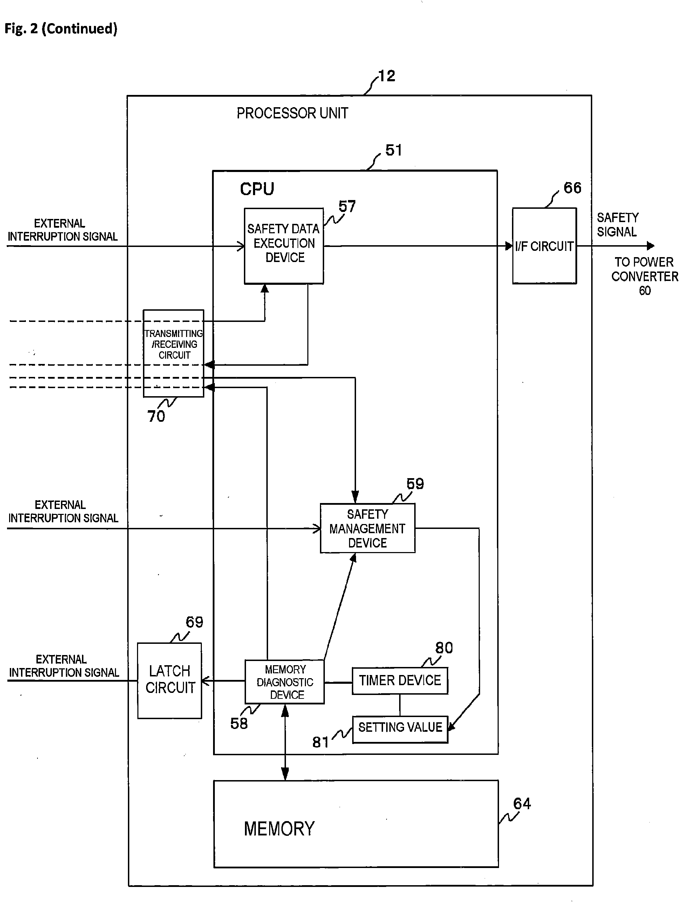

FIG. 2 is a functional block diagram of the processor units 11, 12. The processor unit 11 includes a CPU 21 that executes arithmetic processing; a memory 34 that stores data; a transmitting/receiving circuit 35 that transmits and receives data to/from a communication apparatus 10; I/F (interface) circuits 36, 37 that each transmit and receive a safety signal and a control signal to/from the power converter 60; latch circuits 38, 39 that maintain an output of an interruption request for a fixed duration; and a transmitting/receiving circuit 40 that transmits and receives data to/from the processor unit 12.

In addition, the CPU 21 functionally includes a separation device 22 that separates data received from the communication apparatus 10; a safety data transfer device 26 that generates external interruption and internal interruption and transfers safety data to the processor unit 12; a safety data execution device 27 that executes safety processing based on safety data; a control command generation device 24 that generates a control signal to be output to the power converter 60 based on control data from an external controller 2; a connection device 23 that generates communication data to be transmitted to the external controller 2 from results of safety processing and control processing; a timer device 30 that measures time based on a setting value retained in a setting value retention device (hereinafter referred to as a "setting value") 31, such as a register, and outputs an interruption request (internal interruption) at a fixed cycle; a memory diagnostic device 28 that is started by an interruption request from the timer device 30 to diagnose a memory region; and a safety management device 29 that monitors the presence of an anomaly based on diagnosis results by the memory diagnosis device 28 and executes predetermined fail-safe processing in case of anomaly detection.

The processor unit 12 includes a CPU 51 that executes arithmetic processing; a memory 64 that stores data; an I/F circuit 66 that transmits and receives a safety signal to/from the power converter 60; a latch circuit 69 that maintains an output of an interruption request for a fixed duration; and a transmitting/receiving circuit 70 that transmits and receives data to/from the processor unit 11. In addition, the transmitting/receiving circuit 40 and the transmitting/receiving circuit 70 are physically connected with each other through serial communication. In FIG. 2, a broken line between the circuits 40, 70 means a logical connection.

In addition, the CPU 51 functionally includes a safety data execution device 57 (27) that executes safety processing based on safety data transmitted from the processor unit 11; a timer device 80 that measures time based on a setting value 81 and outputs an interruption request (internal interruption); a memory diagnostic device 58 that is started by an interruption request from the timer device 80 to diagnose a memory region; and a safety management device 59 that monitors the presence of an anomaly based on diagnosis results by the memory diagnostic device 58 and executes predetermined fail-safe processing in case of anomaly detection.

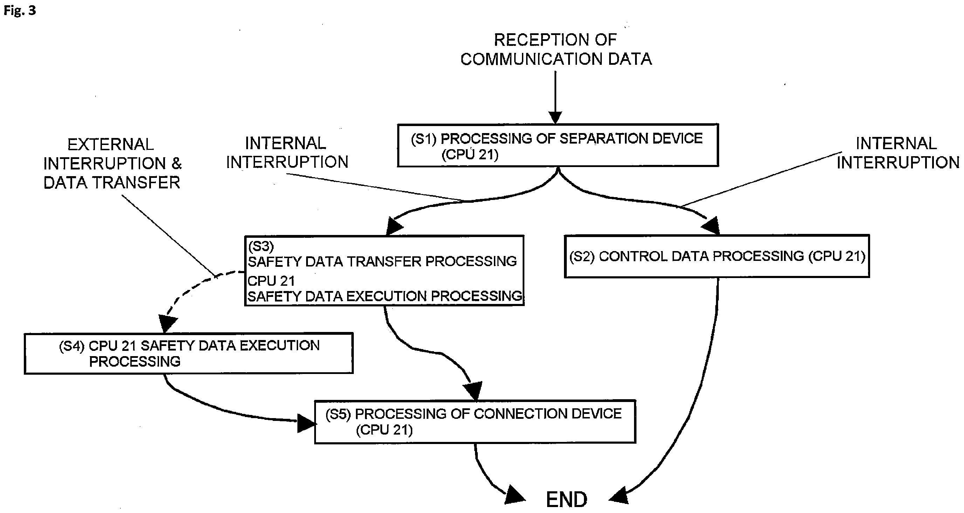

The operational outline of the safety control system 1 having the above configuration will be described below. In FIG. 3, when the safety control system 1 receives communication data, first, the separation device 22 of the CPU 21 separates the communication data received from the communication apparatus 10 into safety data and control data (S1). If the communication data is control data, the control command generation device 24 executes control data processing and outputs a control signal to the power converter 60 (S2), and then the processing is completed. On the other hand, if the communication data is safety data in step S1, the safety data transfer device 26 of the CPU 21 transfers the safety data to the CPU 51, while the safety data execution device 27 executes safety processing based on the safety data (S3). At the same time, memory diagnostic processing is also executed at a cycle preset in the safety data. Upon receiving the safety data from the CPU 21, the CPU 51 executes safety processing based on the safety data (S4). The processing results of the safety data by the processor 21 and the processor 51 are organized in the processor 21 by the data synchronization device, and the safety data is converted into communication data by the connection device 23, which is in turn transmitted to the external controller 2 through the communication apparatus 10 (S5).

The operation of the safety control system 1 will be described in detail below.

### (Received Data Separation Processing)

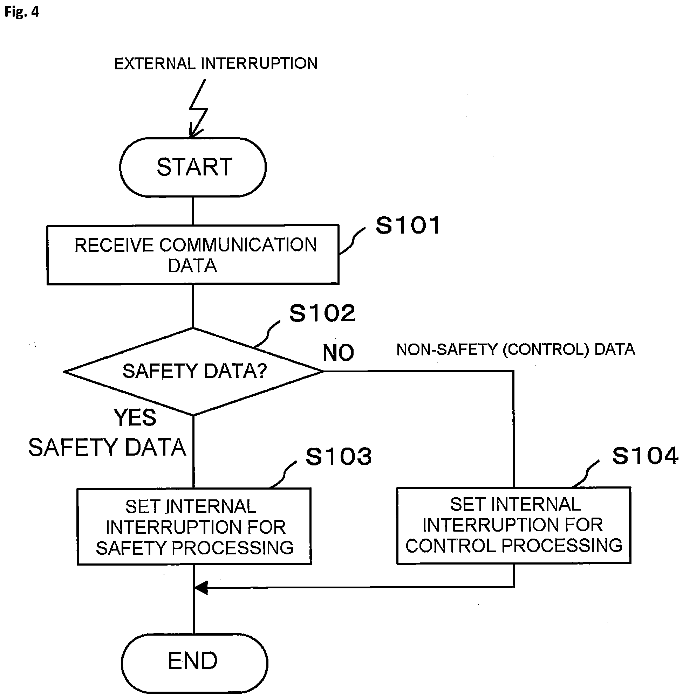

FIG. 4 shows a processing procedure of a separation device 22. The communication data transmitted through the communication apparatus 10 is received through the transmitting/receiving circuit 35 and received by the separation device 22 of the CPU 21 (S101). Next, the separation device 22 determines whether the communication data is safety data or control data (S102). Data (data type) for discriminating between safety data and control data is defined in advance in the communication data, and this determination is made based on the data type. As a result of the determination, if the data is determined to be safety data, internal interruption for safety processing is set (S103). If the data is determined to be control data, internal interruption for control processing is set (S104).

When the communication data includes both of safety data and control data, the safety data and the control data are separated from each other, and both of internal interruption for safety processing and internal interruption for control processing are set. The internal interruption is the interruption for starting a particular program of the CPU. By using the internal interruption, even when the control data and the safety data are received at the same time or another processing is executed, processing is sequentially executed according to the predetermined precedence of programs; therefore, safety communication processing and another processing with high urgency can be executed with high efficiency. Moreover, processing by a different interruption factor from the control data processing assures independent safety data processing.

### (Control Command Generation Processing)

The control command generation device 24 starts up with internal interruption generated by the separation device 22 as a trigger and outputs control data, such as a speed command, to the power converter 60 as a control signal. In addition, the control command generation device 24 transmits a control response signal, such as a current speed obtained from the power converter 60, to the connection device 23, which will be described later.

### (Safety Data Transfer Processing)

The safety data transfer device 26 starts up with the internal interruption generated by the separation device 22 as a trigger and outputs an external interruption request to the CPU 51 of the processor unit 12. This request is output by a writing operation into a pre-allocated particular address. More specifically, when a writing signal is input into the latch circuit 38, the latch circuit 38 outputs a pulse signal for a fixed duration so that interruption becomes active (enabled). The pulse signal is input into the CPU 51 as an external interruption signal to start a safety data execution device 57 of the CPU 51.

At the same time, the safety data transfer device 26 transmits safety data to the processor unit 12 through the transmitting/receiving circuit 40. The safety data transmitted from the processor unit 11 is received by the transmitting/receiving circuit 70 of the processor unit 12 and delivered to the safety data execution device 57 of the CPU 51.

The safety data transfer device 26 further sets internal interruption to start the safety data execution device 27.

### (Safety Data Execution Processing)

Upon starting up with the internal interruption set by the safety data transfer device 26, the safety data execution device 27 of the processor unit 11 generates a safety signal necessary for safety processing from safety data and outputs the signal to the power converter 60 through the I/F circuit 36. The processing result is delivered to the connection device 23.

On the other hand, upon starting up with an external interruption signal output from the latch circuit 38, the safety data execution device 57 of the processor unit 12 receives safety data transmitted from the safety data transfer device 26, generates a safety signal necessary for safety processing from the safety data and outputs the signal to the power converter 60 through the I/F circuit 66. The processing result is transmitted to the connection device 23 of the processor unit 11.

In this manner, synchronization processing of the safety data is achieved between the processor units 11, 12 by generation of external and internal interruption signals and transfer of the safety data by the separation device 22 and the safety data transfer device 26, and processing of the safety data execution devices 27, 57 of both the processor units 11, 12.

### (Data Connection Processing)

The connection device 23 generates communication data from the processing results of safety data obtained by the safety data execution device 27 and the safety data execution device 57 of the processor unit 12 and transmits the communication data to the external controller 2 via the communication apparatus 10. The connection device 23 also generates communication data based on a control response signal transmitted from the control command generation device 24 and transmits the communication data to the external controller 2.

### (Synchronization Processing of Memory Diagnosis)

It is important to synchronize memory diagnosis processing executed in a fixed cycle, among the safety processing. This procedure will be described below. The fixed-cycle processing includes output voltage check of the power converter 60 and safety monitoring, such as monitoring of the speed of a motor 4, in addition to memory diagnosis in CPU. Such processing may be executed before and after the memory diagnosis, and it will be described below how memory diagnosis is to be synchronized between the processor units 11, 12.

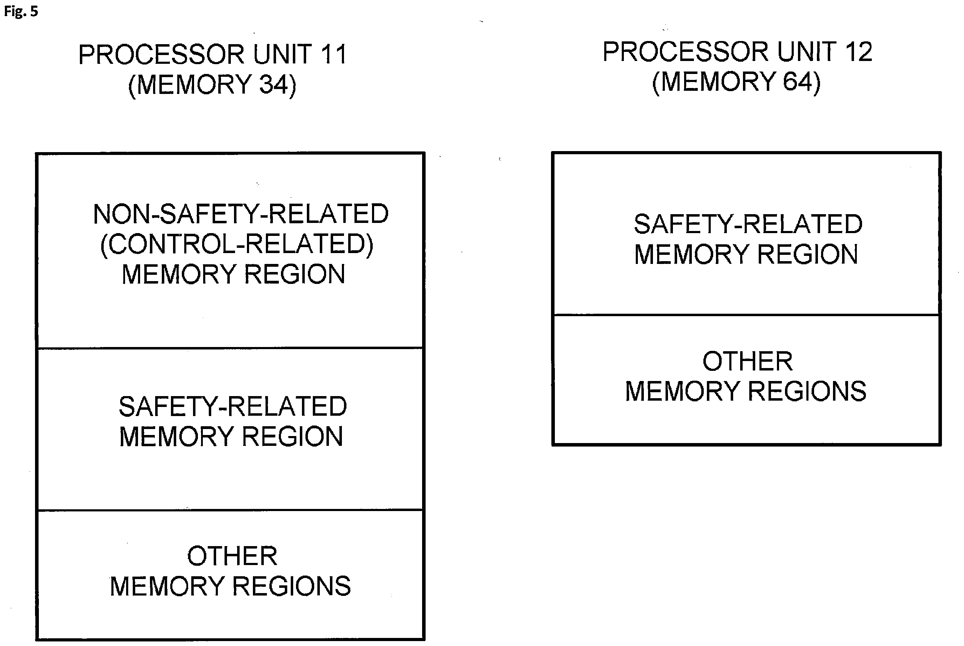

FIG. 5 shows a configuration of memories connected to or built in the CPU 21 and the CPU 51. The memory 34 of the processor unit 11 is previously partitioned into a non-safety-related (control-related) memory region, a safety-related memory region, and other regions . This partition may be created using a tool, such as a linker. Such a partition prevents direct influence upon the memory of safety data processing even when memory rewriting occurs due to an erroneous program in the control data processing. In addition, even if some anomaly occurs, for example, rewriting occurs beyond a memory space, the processor unit 12 also executes the similar safety data processing so as to perform mutual monitoring, thus some anomaly can be detected, allowing safety to be assured.

The processor unit 12 is partitioned into a safety-related memory region and other regions. The processor unit 11 and the processor unit 12 synchronize with each other to execute safety processing as described above; therefore, the safety-related memory region is controlled to obtain the same data at any time. Accordingly, both the CPUs synchronize with each other to perform memory diagnosis (e.g. read/write check) of the safety-related memory region and use error codes generated from the memory region to check whether they coincide with each other in a fixed cycle.

Moreover, the power converter 60 and the motor 4 are also monitored at intervals of fixed cycles as to whether some anomaly in temperature and voltage or some anomaly out of specifications exists, and, in case that an anomaly occurs, previously defined safety operation is performed. The safety operation includes gate shut-down of a power line in the power converter 60, safety deceleration and stop for decelerating a load of the motor 4 and the like with a fixed value, and a safety speed limit.

As processing of an error detection code, an error detection code (e.g. CRC) of the safety-related memory region at a fixed cycle of 5 ms is calculated and the calculation result is transmitted to each other.

The outline of the procedure for the memory diagnosis processing is as follows: the memory diagnostic devices 28, 58 of both the processor units 11, 12 are started by internal interruption by the timer devices 30, 80, and after fixed-cycle processing described above, the error detection codes are calculated and transmitted to each other. Subsequently, the safety management devices 29, 59 compare the error detection codes of both the processor units 11, 12 to determine whether or not they coincide with each other.

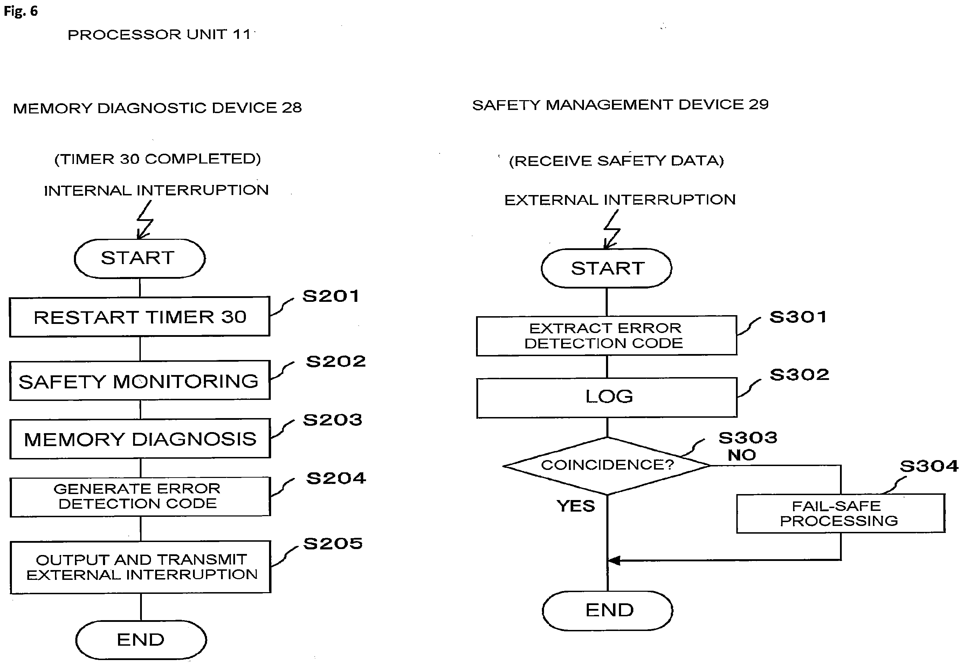

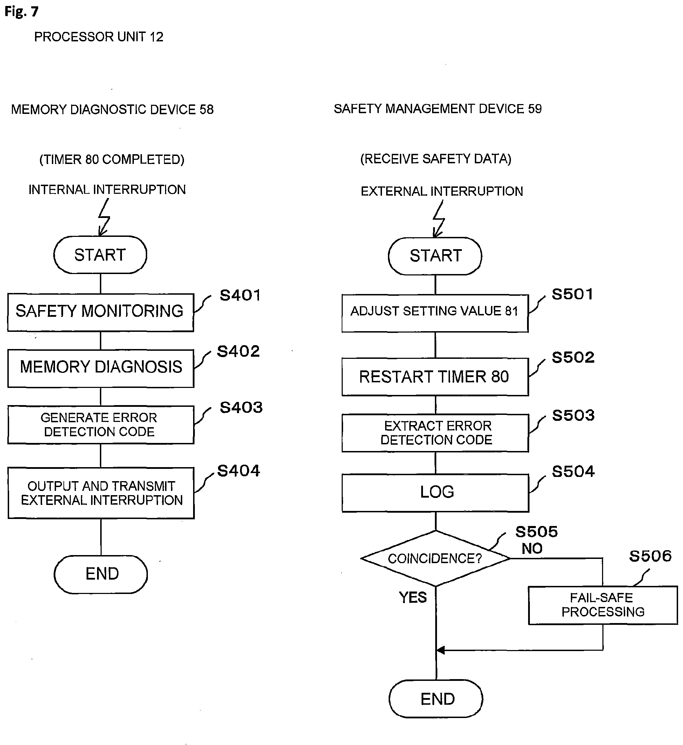

Referring now to FIGS. 6 and 7, the procedure of memory diagnosis processing will be described in detail below for each of the processor units 11, 12.

### (Memory Diagnosis Processing of Processor Unit 11)

The memory diagnostic device 28 of the processor unit 11 starts up with internal interruption after time lapse of a setting value 31 of the timer device 30, restarts the timer device 30 (S201), executes safety monitoring (e.g. output voltage check of the power converter 60) (S202), and then executes memory diagnosis processing (S203). Further, the memory diagnosis device 28 generates an error detection code for the safety-related region (S204) and stores the code in a predetermined region of the memory 34. The memory diagnosis device 28 then outputs external interruption and transmits the generated error detection code to the processor unit 12 (S205) .

Upon starting up with the external interruption from the memory diagnostic device 58 of the processor unit 12, the safety management device 29 of the processor unit 11 extracts an error detection code transmitted from the memory diagnostic device 58, extracts an own error detection code stored in the memory 34 (S301) for log, and determines whether or not both thereof coincide with each other (S302, S303) . As a result of the determination, if they do not coincide with each other ("NO" in S303), the safety management device 29 executes predetermined fail-safe processing (S304).

### (Memory Diagnosis Processing of Processor Unit 12)

The memory diagnostic device 58 of the processor unit 12 starts up with internal interruption after time lapse of a setting value 81 of the timer device 80. After the safety monitoring is executed (S401), the memory diagnosis device 58 executes memory diagnostic processing (S402), generates an error detection code for the safety-related region and stores the code in a predetermined region of the memory 64 (S403) . The memory diagnosis device 58 then outputs external interruption and transmits the generated error detection code to the processor unit 11 (S404).

Upon starting up with the external interruption from the memory diagnostic device 28 of the processor unit 11, the safety management device 59 of the processor unit 12 adjusts the setting value 81 (S501) and restarts the timer device 80 (S502) . The setting value 81 is adjusted as follows: a time difference between external interruption signal output timing from the memory diagnostic device 58 and external interruption timing from the memory diagnostic device 28 is measured. When the external interruption timing from the memory diagnostic device 28 is later by at least a fixed value, addition to the setting value 81 is made by a predetermined value. Thus, the next starting timing of the memory diagnostic device 58 becomes later. On the other hand, when the external interruption timing from the memory diagnostic device 28 is earlier by at least a fixed value, subtraction from the setting value 81 is made by a predetermined value. Thus, the next starting timing of the memory diagnostic device 58 becomes earlier.

Next, an error detection code transmitted from the memory diagnostic device 28 is extracted, an own error detection code stored in the memory 64 is extracted (S503) for log, and it is determined whether or not both thereof coincide with each other (S504, S505) . As a result of the determination, if they do not coincide with each other ("NO" in S505), predetermined fail-safe processing is executed (S506).

In processing shown in FIGS. 6 and 7, the error detection codes are mutually transmitted; however, an error detection code may be transmitted along with a transmission number to be incremented in order for each transmission. In addition, the error detection codes are compared, including the transmission numbers, and when at least either one of the transmission numbers and the error detection codes has no coincidence, error processing is executed. Thus, it can be promptly detected that an out-of-synchronization state due to break-down or the like exists.

In this manner, the present embodiment allows the number of processor units to be reduced, while maintaining synchronization between safety functions in a dual-mode configuration. In particular, since the timer device 80 of the processor unit 12 having only a safety function is made to follow the timing of the timer device 30 of the processor unit 11 by the above processing, the processor units 11, 12 synchronize with each other with high precision. In case that out-of-synchronization occurs between safety functions due to break-down or the like, the out-of-synchronization is detected and error processing is executed, thus allowing a safety control system to be constructed with high reliability.

## Claims

1. A safety control system, comprising:
a communication apparatus (10) for transmitting and receiving communication data to/from an external controller (2) through a network;
a first processor unit (11) for performing a control function that receives communication data transmitted from the external controller (2) through the communication apparatus (10) and outputs a control signal to a power converter (60) based on the communication data, and a safety function that outputs a stop command to the power converter (60) in response to the communication data; and
a second processor unit (12) for performing only a safety function; wherein
the first processor unit (11) includes:
a control command generation device (24) for, if the communication data includes non-safety data, generating a control signal based on the non-safety data and outputting the control signal to the power converter (60);
a safety data transfer device (26) for, if the communication data includes safety data, generating a first external interruption signal, which is an interruption signal for the second processor unit (12), and a first internal interruption signal, which is an interruption signal in the processor, and transferring the safety data to the second processor unit (12);
a first safety data execution device (27) for executing safety processing based on the safety data triggered by the first internal interruption signal; and
a connection device (23) for receiving a result of safety processing executed by the second processor unit (12), and generating communication data to be transmitted to the external controller (2) based on the received result and an execution result of the first safety data execution device (27), and
the second processor unit (12) includes:
a second safety data execution device (57) that starts up with the first external interruption signal, wherein the device executes safety processing based on the safety data transferred from the first processor unit (11), and transmit the result of the safety processing to the first processor unit (11).

2. The safety control system according to claim 1, wherein
the first processor (11) unit includes:
a first timer device (30) for generating a second internal interruption signal at a fixed time interval,
a first memory diagnostic device (28) for executing memory diagnostic processing by the second internal interruption signal,
generating an error detection code based on a first safety-related memory region, generating a second external interruption signal and transmitting the error detection code to the second processor unit (12), after generation of the error detection code, and
a first safety management device (29) that starts up with a third external interruption signal generated by a second memory diagnostic device (58) of the second processor unit (12), wherein the first safety management device (29) compares an error detection code transmitted from the second memory diagnostic device (58) and an error detection code generated by the first memory diagnostic device (28), and if both codes do not coincide with each other, the first safety management device (29) executes error processing; and
the second processor unit (12) includes:
a second timer device (80) for generating a third internal interruption signal after lapse of a preset time before restarting, the second memory diagnostic device (58) for executing memory diagnostic processing in response to the third internal interruption signal, generating an error detection code based on a second safety-related memory region, generating a fourth external interruption signal and transmitting the error detection code to the first processor unit (11), after generation of the error detection code, and
a second safety management device (59) that starts up with the second external interruption signal generated by the first memory diagnostic device (28) of the first processor unit (11), wherein the second safety management device (59) adjusts the preset time of the second timer device (80) based on a time difference between external interruption signal output timings of the first memory diagnostic device (28) and the second memory diagnostic device (58) and compares an error detection code transmitted from the first memory diagnostic device (28) and an error detection code generated by the second memory diagnostic device (58), and if both codes do not coincide with each other, the second safety management device (59) executes error processing.

3. The safety control system according to claim 2, wherein
the first memory diagnostic device (28) transmits a first error detection code along with a first transmission number to be incremented in order for each transmission,
the second memory diagnostic device (58) transmits a second transmission number along with a second error detection code with a value obtained by incrementing the latest first transmission number transmitted from a first memory device as the transmission number, and
the first safety management device (29) and the second safety management device (59) compare respective error detection codes including respective transmission numbers, and when at least either one of the transmission numbers and the error detection codes has no coincidence, execute error processing.

## Patentansprüche

1. Sicherheitssteuerungssystem, umfassend:
ein Kommunikationsgerät (10) zum Senden und Empfangen von Kommunikationsdaten an einen/von einem externen Controller (2) über ein Netzwerk;
eine erste Prozessoreinheit (11) zum Ausführen einer Steuerfunktion, die Kommunikationsdaten, die von dem externen Controller (2) über das Kommunikationsgerät (10) gesendet werden, empfängt und ein Steuersignal an einen Leistungswandler (60) basierend auf den Kommunikationsdaten ausgibt, und einer Sicherheitsfunktion, die als Reaktion auf die Kommunikationsdaten einen Stoppbefehl an den Leistungswandler (60) ausgibt; und
eine zweite Prozessoreinheit (12) zum Ausführen nur einer Sicherheitsfunktion;
wobei
die erste Prozessoreinheit (11) umfasst:
eine Vorrichtung (24) zum Generieren eines Steuerbefehls, um ein Steuersignal basierend auf den Nicht-Sicherheitsdaten zu generieren und das Steuersignal an den Leistungswandler (60) auszugeben, falls die Kommunikationsdaten Nicht-Sicherheitsdaten umfassen;
eine Vorrichtung (26) zum Übertragen von Sicherheitsdaten, um ein erstes externes Unterbrechungssignal, wobei es sich um ein Unterbrechungssignal für die zweite Prozessoreinheit (12) handelt, und ein erstes internes Unterbrechungssignal, wobei es sich um ein Unterbrechungssignal in dem Prozessor handelt, zu generieren und um die Sicherheitsdaten an die zweite Prozessoreinheit (12) zu übertragen, falls die Kommunikationsdaten Sicherheitsdaten umfassen;
eine erste Vorrichtung (27) zum Ausführen von Sicherheitsdaten, um eine Sicherheitsverarbeitung basierend auf den Sicherheitsdaten auszuführen, die durch das erste interne Unterbrechungssignal ausgelöst werden; und
eine Verbindungsvorrichtung (23), um ein Ergebnis der Sicherheitsverarbeitung, die durch die zweite Prozessoreinheit (12) ausgeführt wird, zu empfangen und Kommunikationsdaten, die an den externen Controller (2) zu senden sind, basierend auf dem empfangenen Ergebnis und einem Ausführungsergebnis der ersten Vorrichtung (27) zum Ausführen von Sicherheitsdaten zu generieren, und
die zweite Prozessoreinheit (12) umfasst:
eine zweite Vorrichtung (57) zum Ausführen von Sicherheitsdaten, die mit dem ersten externen Unterbrechungssignal beginnt, wobei die Vorrichtung eine Sicherheitsverarbeitung basierend auf den Sicherheitsdaten ausführt, die von der ersten Prozessoreinheit (11) übertragen werden, und das Ergebnis der Sicherheitsverarbeitung an die erste Prozessoreinheit (11) sendet.

2. Sicherheitssteuerungssystem nach Anspruch 1, wobei
die erste Prozessoreinheit (11) umfasst:
einen ersten Zeitgeber (30), um ein zweites internes Unterbrechungssignal in einem festen Zeitintervall zu generieren,
eine erste Speicherdiagnosevorrichtung (28), um Ausführen eine Speicherdiagnoseverarbeitung durch das zweite interne Unterbrechungssignal auszuführen, einen Fehlerdetektionscode basierend auf einer ersten sicherheitsbezogenen Speicherregion zu generieren, ein zweites externes Unterbrechungssignal zu generieren und den Fehlerdetektionscode an die zweite Prozessoreinheit (12) zu senden, nachdem der Fehlerdetektionscode generiert wurde, und
eine erste Sicherheitsverwaltungsvorrichtung (29), die mit einem dritten externen Unterbrechungssignal beginnt, das durch eine zweite Speicherdiagnosevorrichtung (58) der zweiten Prozessoreinheit (12) generiert wird, wobei die erste Sicherheitsverwaltungsvorrichtung (29) einen Fehlerdetektionscode, der von der zweiten Speicherdiagnosevorrichtung (58) gesendet wird, und einen Fehlerdetektionscode, der von der ersten Speicherdiagnosevorrichtung (28) generiert wird, vergleicht, und falls die beiden Codes nicht übereinstimmen, die erste Sicherheitsverwaltungsvorrichtung (29) eine Fehlerverarbeitung ausführt; und
die zweite Prozessoreinheit (12) umfasst:
einen zweiten Zeitgeber (80), um ein drittes internes Unterbrechungssignal nach dem Verlauf einer voreingestellten Zeit vor dem Neustarten zu generieren, wobei die zweite Speicherdiagnosevorrichtung (58) zum Ausführen einer Speicherdiagnoseverarbeitung als Reaktion auf das dritte interne Unterbrechungssignal einen Fehlerdetektionscode basierend auf einer zweiten sicherheitsbezogenen Speicherregion generiert, ein viertes externes Unterbrechungssignal generiert und den Fehlerdetektionscode an die erste Prozessoreinheit (11) sendet, nachdem der Fehlerdetektionscode generiert wurde, und
eine zweite Sicherheitsverwaltungsvorrichtung (59), die mit dem zweiten externen Unterbrechungssignal beginnt, das durch die erste Speicherdiagnosevorrichtung (28) der ersten Prozessoreinheit (11) generiert wird, wobei die zweite Sicherheitsverwaltungsvorrichtung (59) die voreingestellte Zeit des zweiten Zeitgebers (80) basierend auf einer Zeitdifferenz zwischen den Zeiteinstellungen der externen Unterbrechungssignalausgaben der ersten Speicherdiagnosevorrichtung (28) und der zweiten Speicherdiagnosevorrichtung (58) anpasst und einen Fehlerdetektionscode, der von der ersten Speicherdiagnosevorrichtung (28) gesendet wird, und einen Fehlerdetektionscode, der durch die zweite Speicherdiagnosevorrichtung (58) generiert wird, vergleicht, und falls die beiden Codes nicht übereinstimmen, die zweite Sicherheitsverwaltungsvorrichtung (59) eine Fehlerverarbeitung ausführt.

3. Sicherheitssteuerungssystem nach Anspruch 2, wobei
die erste Speicherdiagnosevorrichtung (28) einen ersten Fehlerdetektionscode zusammen mit einer ersten Sendungsnummer sendet, die der Reihe nach für jede Sendung zu inkrementieren ist,
die zweite Speicherdiagnosevorrichtung (58) eine zweite Sendungsnummer sendet, zusammen mit einem zweiten Fehlerdetektionscode mit einem Wert, der durch Inkrementieren der neuesten ersten Sendungsnummer, die von einer ersten Speichervorrichtung als Sendungsnummer gesendet wird, erzielt wird, und
die erste Sicherheitsverwaltungsvorrichtung (29) und die zweite Sicherheitsverwaltungsvorrichtung (59) jeweilige Fehlerdetektionscodes vergleichen, die jeweilige Sendungsnummern umfassen, und wenn mindestens eine(r) der Sendungsnummern und der Fehlerdetektionscodes keine Übereinstimmung aufweist, eine Fehlerverarbeitung ausführen.

## Revendications

1. Système de contrôle de sécurité, comprenant :
un appareil de communication (10) pour transmettre et recevoir des données de communication vers/depuis un dispositif de commande externe (2) par l'intermédiaire d'un réseau ;
une première unité de processeur (11) pour réaliser une fonction de contrôle qui reçoit des données de communication transmises depuis le dispositif de commande externe (2) par l'intermédiaire de l'appareil de communication (10) et délivre un signal de contrôle à un convertisseur de puissance (60) sur la base des données de communication, et une fonction de sécurité qui délivre une instruction d'arrêt au convertisseur de puissance (60) en réponse aux données de communication ; et
une seconde unité de processeur (12) pour réaliser uniquement une fonction de sécurité ;
dans lequel
la première unité de processeur (11) comprend :
un dispositif de génération d'instruction de contrôle (24) pour, si les données de communication comportent des données de non-sécurité, générer un signal de contrôle sur la base des données de non-sécurité et délivrer le signal de contrôle au convertisseur de puissance (60) ;
un dispositif de transfert de données de sécurité (26) pour, si les données de communication comportent des données de sécurité, générer un premier signal d'interruption externe, qui est un signal d'interruption pour la seconde unité de processeur (12), et un premier signal d'interruption interne, qui est un signal d'interruption dans le processeur, et transférer les données de sécurité à la seconde unité de processeur (12) ;
un premier dispositif d'exécution de données de sécurité (27) pour exécuter un traitement de sécurité sur la base des données de sécurité, déclenché par le premier signal d'interruption interne ; et
un dispositif de connexion (23) pour recevoir un résultat de traitement de sécurité exécuté par la seconde unité de processeur (12), et générer des données de communication à transmettre au dispositif de commande externe (2) sur la base du résultat reçu et d'un résultat d'exécution du premier dispositif d'exécution de données de sécurité (27), et
la seconde unité de processeur (12) comprend :
un second dispositif d'exécution de données de sécurité (57) qui démarre avec le premier signal d'interruption externe, le dispositif exécutant un traitement de sécurité sur la base des données de sécurité transférées depuis la première unité de processeur (11), et transmet le résultat du traitement de sécurité à la première unité de processeur (11).

2. Système de contrôle de sécurité selon la revendication 1, dans lequel
la première unité de processeur (11) comprend :
un premier dispositif de temporisateur (30) pour générer un deuxième signal d'interruption interne à un intervalle de temps fixe,
un premier dispositif de diagnostic de mémoire (28) pour exécuter un traitement de diagnostic de mémoire par le deuxième signal d'interruption interne, générer un code de détection d'erreur sur la base d'une première région de mémoire liée à la sécurité, générer un deuxième signal d'interruption externe et transmettre le code de détection d'erreur à la seconde unité de processeur (12), après génération du code de détection d'erreur, et
un premier dispositif de gestion de sécurité (29) qui démarre avec un troisième signal d'interruption externe généré par un second dispositif de diagnostic de mémoire (58) de la seconde unité de processeur (12), le premier dispositif de gestion de sécurité (29) comparant un code de détection d'erreur transmis depuis le second dispositif de diagnostic de mémoire (58) et un code de détection d'erreur généré par le premier dispositif de diagnostic de mémoire (28) et, si les deux codes ne coïncident pas l'un avec l'autre, le premier dispositif de gestion de sécurité (29) exécutant un traitement d'erreur ; et
la seconde unité de processeur (12) comprend :
un second dispositif de temporisateur (80) pour générer un troisième signal d'interruption interne après écoulement d'une durée prédéfinie avant redémarrage, le second dispositif de diagnostic de mémoire (58) étant configuré pour exécuter un traitement de diagnostic de mémoire en réponse au troisième signal d'interruption interne, générer un code de détection d'erreur sur la base d'une seconde région de mémoire liée à la sécurité, générer un quatrième signal d'interruption externe et transmettre le code de détection d'erreur à la première unité de processeur (11), après génération du code de détection d'erreur, et
un second dispositif de gestion de sécurité (59) qui démarre avec le deuxième signal d'interruption externe généré par le premier dispositif de diagnostic de mémoire (28) de la première unité de processeur (11), le second dispositif de gestion de sécurité (59) ajustant la durée prédéfinie du second dispositif de temporisateur (80) sur la base d'une différence de temps entre des temporisations de sortie de signal d'interruption externe du premier dispositif de diagnostic de mémoire (28) et du second dispositif de diagnostic de mémoire (58) et comparant un code de détection d'erreur transmis depuis le premier dispositif de diagnostic de mémoire (28) et un code de détection d'erreur généré par le second dispositif de diagnostic de mémoire (58) et, si les deux codes ne coïncident pas l'un avec l'autre, le second dispositif de gestion de sécurité (59) exécutant un traitement d'erreur.

3. Système de contrôle de sécurité selon la revendication 2, dans lequel
le premier dispositif de diagnostic de mémoire (28) transmet un premier code de détection d'erreur conjointement avec un premier numéro de transmission à incrémenter dans l'ordre pour chaque transmission,
le second dispositif de diagnostic de mémoire (58) transmet un second numéro de transmission conjointement avec un second code de détection d'erreur ayant une valeur obtenue en incrémentant le premier numéro de transmission plus récent transmis depuis un premier dispositif de mémoire en tant que numéro de transmission, et
le premier dispositif de gestion de sécurité (29) et le second dispositif de gestion de sécurité (59) comparent des codes de détection d'erreur respectifs comprenant des numéros de transmission respectifs et, lorsqu'au moins un parmi les numéros de transmission et les codes de détection d'erreur n'a pas de coïncidence, exécutent un traitement d'erreur.
